# EUROPEAN PATENT APPLICATION

(11) **EP 4 748 592 A1**
(43) Date of publication of application: **27.05.2026**
(21) Application number: 24782919.5
(22) Date of filing: 18.07.2024
(51) Int. Cl.: B60C 23/00, B60C 23/04, B60C 23/14

(54) **IMPROVED TYRE PRESSURE REFILLING (TPRS) CONTROL SYSTEM FOR INDUSTRIAL VEHICLES**

(30) Priority: 21.07.2023 ES 202330624
(71) Applicant: Accesorios y Elevadores Valencia, S.L., 46530 Puzol (Valencia) (ES)
(72) Inventor: MORENO IBAÑEZ, Alberto, 46530 Puzol (ES)
(74) Representative: Isern Patentes y Marcas S.L.
(86) International application number: PCT/ES2024/070465
(87) International publication number: WO 2025/022034

(57) **Abstract**

The present invention relates to a control system (9) for controlling the automatic tyre pressure refilling in a vehicle. The system (9) includes various sensors (6, 12, 13, 14) distributed at corresponding points of its pneumatic and electrical circuit, and a controller (10) to receive outputs from the sensors and provide indicative signals in order to signal working or operative conditions, of the system, to users or observers of said vehicle. The system further comprises a controller. The sensors include a sensor (6) of pressure multiplier (3) exhaust pulses, an exhaust pressure sensor (14), a system input pressure sensor (12) and a system output pressure sensor (13). The system (9) also has an electrical connection (8) to activate a light in order to indicate different operative/abnormal conditions of the system (9).

## Description

### Technical field

The present invention relates to the automotive technical sector. It relates, more specifically, to automatic tyre inflation or refilling systems and, in particular, to the control portion of said systems.

### Background of the invention

The importance of tyre pressure in wheeled vehicles is known both for the safety of users and for the correct functioning of the vehicle's components and, therefore, savings in repairs and maintenance thereof. Tyre pressure influences several aspects of the vehicle, including rolling resistance, fuel consumption and associated emissions, braking distance and overall vehicle stability. Repair, maintenance tasks or simply changing tyres constitute one of the most common reasons for forced inactivity for vehicle users. This downtime represents an inconvenience for any driver and translates into a significant decrease regarding performance, productivity and economic income when commercial vehicles are specifically involved. Furthermore, the mentioned factors, as already mentioned, are very important in relation to the safety and smooth driving of the vehicle. Tyres with insufficient air pressure will wear out more quickly and may even burst during a route, which can cause situations that endanger the lives of all road users, not just the drivers of the vehicles in question. Likewise, if tyre pressure varies unevenly over time, the tyres will also wear at different rates.

Therefore, adequate control of tyre pressure, anticipating major breakdowns or deterioration, is a preventive measure with clear effects both economically and in relation to road safety. The savings come from maintenance and tyre change frequency as well as fuel consumption, which also results in fewer CO₂ emissions and lower variable expenses.

In that regard, road regulatory authorities and automobile manufacturers are looking for solutions and improvements that translate, for example, into systems called TPMS (Tyre Pressure Monitoring System) and TPRS (Tyre Pressure Refilling System). As their names indicate, the first is limited to controlling the pressure of the tyres, while the second goes one step further and automatically inflates the tyres when the air pressure therein falls below a certain level. The system constantly monitors the pressure in all tyres, and when it drops, the system adds air. This contribution comes from the air tank that is used, for example, for the pneumatic suspension and the braking system of the vehicle, so a system is required that controls the various pressure values at various points in the circuit and prioritises the provisions of that air according to these values. In general, the system tops up the tyre pressure in the event of any leak that may occur and thus maintains an initially adjusted inflation pressure constant.

More specifically, among the components included in a TPRS system, for European trailers and semi-trailers, there is a pressure multiplier or amplifier that is intended to raise the air pressure of the vehicle's compressed air installation up to a nominal inflation pressure of its tyres, a regulator for the output pressure and an overflow or protection valve of the pneumatic circuit (in most cases, this overflow valve is included in the vehicle installation). The pressure at each of these points, the actions to be applied on the components according to the detected values and the indicative or information signals provided for users must be appropriately monitored and controlled. In this regard, some of the aspects to which the mentioned system and its control methods relate are the inflation of the tyres while the vehicle is running and also when it is stopped and operating indicator elements with different lighting codes.

Although the system described above fulfils its function adequately, it would be desirable to have a TPRS control system with improved capabilities in terms of operation signalling and/or possible deficiencies thereof for users of this type of vehicle. In this sense, the present invention provides improvements in the control section of a TPRS in terms of communication of signals that are useful for monitoring the status of said TPRS by users and people outside the vehicle. Furthermore, these improvements meet the requirements established by United Nations Regulation 141 regarding the approval of vehicles regarding their tyre pressure monitoring systems.

### Description of the invention

For the above purpose, a control system for controlling the automatic refilling of the tyre pressure in a vehicle is provided. Essentially, this type of control system usually comprises an overflow or protection valve to guarantee the priority of air supply to essential components of the vehicle, a pressure multiplier or amplifier, an output pressure regulator and an exhaust pulse sensor connected to the pressure multiplier. The overflow valve, as mentioned above, is usually included in the vehicle installation although, for illustrative purposes (due to its functional link with the tyre refilling control system), the version in which it is included in the control system has been representatively selected; as can be seen from the subsequent description, this does not alter the operation of the rest of the components. The system further comprises a controller. The aforementioned exhaust pulse sensor can be connected to a multiplier exhaust output and, in this way, it can capture the pulses that appear on this output; said captured pulses will be indicative that the tyre pressure refilling is being carried out. Moreover, the exhaust pulse sensor can also be connected to the controller, to notify thereto the appearance of exhaust pulses, and the controller, in turn, will be connected to a CAN bus of the vehicle in question, so that, through this bus, it can communicate an "Insufficient pressure value" message if the exhaust pulse sensor captures these pulses precisely at the amplifier or multiplier exhaust output.

According to a further feature of the invention, the exhaust pulse sensor connected to the pressure multiplier of the control system can be or comprise a flow rate sensor and this can be, specifically, of the type with a turbine, operating due to the Hall effect, or of the type with turbine and dynamo.

According to another feature of the control system of the invention, the exhaust pulse sensor that is connected to the pressure multiplier exhaust output may be or may comprise an exhaust pressure sensor. This is done so that said sensor can capture overpressure in the exhaust output.

In relation to this last technical feature, the exhaust pressure sensor may be or comprise, more specifically, a pressure transducer or a pressure switch type pressure sensor.

According to another feature of the invention, the controller may comprise or be, specifically, an Electronic Control Unit (ECU) of those commonly used in road vehicles.

According to a further feature of the system of the invention, the latter may include an input pressure sensor and an output pressure sensor; in some embodiment, it could simply include one of them. The input pressure sensor is arranged or adapted so as to be able to capture the pressure at the input of the automatic refilling control system; the output pressure sensor is arranged or adapted to capture the pressure at the output of said system, i.e., the pressure of each corresponding tyre.

According to an additional feature of the invention, the above-mentioned input pressure sensor is arranged, in a specific embodiment, right at the input of the overflow valve.

Finally, another feature of the system of the invention relates to the fact that the output pressure sensor adapted to capture the pressure intended for refilling the tyres will be specifically connected to the output of the system pressure regulator.

### Brief description of the drawings

To complement the description, a series of figures are attached that illustrate the control system of the present invention:
Figure 1 shows a diagram of a tyre pressure refill control system for a vehicle of the type commonly used.
Figure 2 shows a diagram of a tyre pressure refill control system of a vehicle according to an embodiment of the present invention.
Figure 3 shows a diagram of a tyre pressure refill control system of a vehicle according to another embodiment of the present invention.

### Detailed description of the invention

Embodiments of the invention illustrated in the figures listed above are described in detail below.

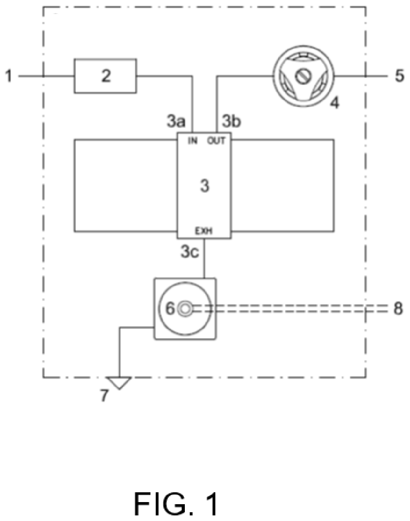

To begin and locate the specific scope of application, a tyre pressure refilling control system, TPRS, of a vehicle according to the prior art will first be described with reference to figure 1. Both in this diagram and in subsequent ones, which relate to refilling control systems (9) according to the present invention, the portions of the systems have been illustrated that are relevant to explain the operation of the system (9) being disclosed herein, omitting other components that are not relevant to said operation or simply representing them schematically, such as, for example, the pneumatic installation (1) of the vehicle or the connection to the tyres (5) in the various figures.

In current TPRS systems (such as the one in figure 1), the air for inflating the tyres (5) usually comes from the compressed air installation (1) of the vehicle, which is also used for other purposes such as a possible pneumatic suspension system and braking system. The first element that this air encounters is an overflow valve (2) that performs a protective function and that allows air to pass through when it is detected that the pressure coming from the installation (1) is sufficient to supply the aforementioned systems (fed with compressed air) and that they have priority over said refilling system. After the valve (2) a pressure amplifier or multiplier (3) is provided that raises the pressure at its input (3a) to a suitable value, at its output (3b), for inflating the tyres (5). (The overflow valve (2) has been represented within the control system (9) to facilitate the explanation of its function with respect to the rest of the components, although, in general, it will be physically included in the vehicle installation).

The control provided by this system (9) is embodied in the regulator (4). This pressure regulator (4) will allow the passage of air from the multiplier (3) to the output connection (5) to the tyres when the pressure in said connection (5) decreases below the preset value in the regulator (4), thus refilling the tyre pressure. When the regulator (4) is opened, the multiplier (3) will be put into operation, a standard device of pistons and reciprocating movement where an air escape pulse is produced through its exhaust port (3c) with each reciprocation of the pistons.

One of the ways to detect that said multiplier (3) is in operation is by monitoring its exhaust pulse output (3c), which occur in the air compression cycles to amplify its pressure. Therefore, an exhaust pulse sensor (6) is provided which, as will be seen later, can take the form of various devices. This exhaust pulse sensor (6) basically generates an electrical signal - i.e., it acts as a flow rate to voltage or current transducer - which can be used to power a warning light connected to the connection (8). In relation to this last component, it should be noted that the numerical references used and that are the same represent equivalent elements, portions or components or that have an equivalent function in the various figures.

This warning light therefore signals that the pressure in one of the tyres (5) has dropped below a predetermined threshold and that the pressure refilling control system has been activated. The air that generated the exhaust pulses that activated the pulse sensor (6) is expelled through the exhaust output (7). Moreover, at the multiplier output (3b), the multiplied or amplified pressure is obtained and is passed through the regulator (4) for its final supply to the tyres (5), as previously explained.

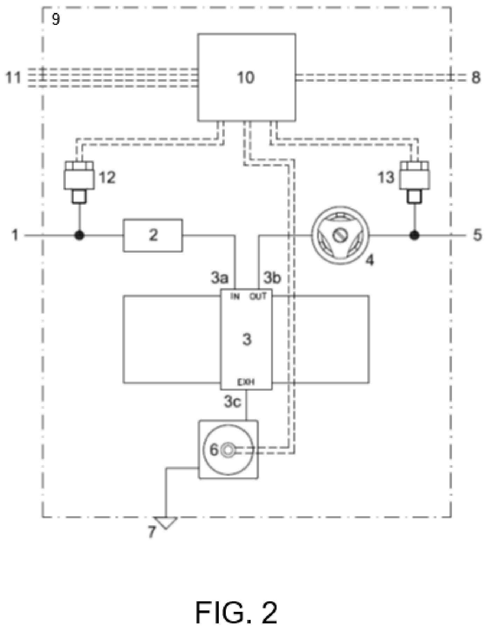

As an improvement to this control system and at the same time in compliance with the requirements of regulation 141 mentioned in the background section, the present inventors propose a tyre refilling control system (9) which is shown in figure 2 in the form of one of its embodiments. It involves unifying or centralising the control of the entire system (9) under a single unit or module (the controller (10)) that interprets, orders, processes and prioritises the signals received and emitted by the same.

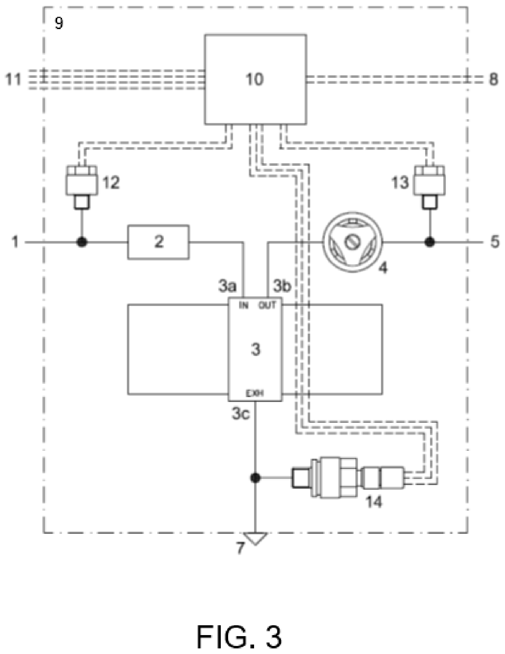

An additional network of sensors is established (12, 13, 14; figures 2 and 3) that capture values at respective points of the pneumatic circuit and the electrical circuit that are part of the system (9).

The Electronic Control Unit or the controller (10) is also connected to a CAN bus of the vehicle. Likewise, the controller (10) (or the ECU in one of its embodiments) is coupled to the connection (8). Thus, for example, the controller (10) can receive, at one of its inputs, the output of the input pressure sensor (12) and determine that, when said output of the sensor (12) is below a minimum limit of pre-established input pressure, there is not sufficient pressure in the circuit for the system (9), which, under certain conditions, can output an indicative signal. The same can be said about the output pressure sensor (13), or about the sensors (6, 14), the interaction of which with the controller (10) is detailed below.

Specifically, the controller (10) is arranged to output two indicative signals depending on its inputs received from the sensors (6, 12, 13, 14):
- "Insufficient pressure value", when the pressure refill is being carried out for less than 8 minutes; this pressure refill coincides with the operation of the multiplier (3) and can be detected from the air exhaust pulses that occur in its exhaust port with any of the sensors (6, 14);
- "System failure", when more than 8 minutes have passed since the start of refilling and it has not stopped, when insufficient pressure is detected in one or more of the input or output sensors, or when a disconnection of any of the sensor cables (6, 12, 13, 14) with the controller or ECU (10) is detected.

In all of the aforementioned cases, the ECU (10), which is electrically powered through the CAN bus (11), receives the signals from the sensor being used, it interprets (through a programme) to which of the specific situations those received signals correspond and sends the corresponding message through the CAN bus (11). At the same time, The ECU (10) would power the electrical connection (8) to activate the exterior warning light of the semi-trailer with an intermittent operating sequence, in the case of the message "Insufficient pressure value", or fixed, in the case of the message "System failure", in accordance with the established regulations.

The message "Insufficient pressure value", together with the activation of the corresponding light, is not generated as soon as a single air escape pulse is detected (to avoid false warnings about starting the refill due to the one-off appearance of these pulses). but rather it will be issued when a succession of these pulses in a sufficient number is detected, which can be done by programming a minimum frequency of pulses from which to activate the warning.

On the contrary, when there is no anomaly, the ECU or controller (10) will constantly send a message such as "Everything OK" to the CAN bus (11).

The exhaust pulse sensor (6) shown in figure 2 can be, for example, a flow rate sensor with a turbine and operating due to the Hall effect or a flow sensor with a turbine and dynamo; in another embodiment, the sensor (6) may be or comprise a pressure sensor (14) which is shown in figure 3. The output of this sensor (6) can be used by the controller (10) to detect that the multiplier (3) is working and that, therefore, the system (9) is refilling the tyres (5), whereby an indicative signal that communicates this fact (detailed above) can be output.

The control system (9) of the present invention is designed with industrial vehicles in mind - especially those of the trailer and semi-trailer type -, which currently make up the usual and reasonable field of application, but can be applied to any wheeled vehicle in which monitoring and subsequent automated inflation of the corresponding tyres is required.

### List of references

1 Pneumatic vehicle installation
2 Overflow valve
3 Pressure multiplier
3a Pressure multiplier input
3b Pressure multiplier output
3c Pressure multiplier exhaust
4 Pressure regulator
5 Tyres
6 Exhaust pulse sensor
7 Final exhaust output
8 Electrical connection
9 Tyre pressure refill system
10 Controller
11 CAN bus
12 Input pressure sensor
13 Output pressure sensor
14 Exhaust pressure sensor

## Claims

1. A control system (9) for controlling the automatic refilling of the tyre pressure in a vehicle, of the type comprising a pressure multiplier (3), an output pressure regulator (4), an exhaust pulse sensor (6) and a controller (10), the exhaust pulse sensor (6) being connected to an exhaust output (3c) of the multiplier (3) to capture the pulses in said output (3c), pulses that are generated when the multiplier (3) is refilling the tyre pressure, and said exhaust pulse sensor (6) being further connected to the controller (10), which is also connected to a CAN bus (11) of the vehicle and is arranged to communicate, through said bus (11), an "Insufficient pressure value" message when the sensor (6) detects exhaust pulses at the output (3c).

2. The control system (9) according to the preceding claim, wherein the exhaust pulse sensor (6) comprises a flow rate or flow sensor (6).

3. The control system (9) according to the preceding claim, wherein the flow rate or flow sensor (6) comprises at least one of a Hall effect turbine flow sensor and a dynamo turbine flow rate sensor.

4. The control system (9) according to claim 1, wherein the exhaust pulse sensor (6) comprises an exhaust pressure sensor (14) to capture an overpressure at the exhaust output (3c).

5. The control system (9) according to the preceding claim, wherein the exhaust pressure sensor (14) comprises at least one of a pressure transducer and a pressure switch type pressure sensor.

6. The control system (9) according to any of the preceding claims, wherein the controller (10) comprises an Electronic Control Unit, ECU.

7. The control system (9) according to any of the preceding claims, further comprising an input pressure sensor (12) arranged to capture the pressure at the input of the automatic refilling control system (9) and/or an output pressure sensor (13) arranged to capture the pressure at the output of said system (9).

8. The control system (9) according to the preceding claim, wherein the input pressure sensor (12) is arranged to capture the pressure at the input of the overflow valve (2).

9. The control system (9) according to any of claims 7 to 8, wherein the output pressure sensor (13) is arranged to capture the pressure at the output of the pressure regulator (4).
